# EUROPEAN PATENT APPLICATION

(11) **EP 1 571 304 A2**
(43) Date of publication of application: **07.09.2005**
(21) Application number: 05004748.9
(22) Date of filing: 03.03.2005
(51) Int. Cl.: F01N 3/30

(54) **Four stroke engine**

(30) Priority: 03.03.2004 JP 2004059173
(71) Applicant: YAMAHA HATSUDOKI KABUSHIKI KAISHA, Shizuoka-ken (JP)
(72) Inventor: Kaneshiro, Tomoki, Iwata-shi Shizuoka-ken (JP)
(74) Representative: Grünecker, Kinkeldey, Stockmair & Schwanhäusser Anwaltssozietät

(57) **Abstract**

The invention relates to a four stroke engine comprising an engine body defining a cylinder bore therein, a piston reciprocally moveable within the cylinder bore along a longitudinal axis thereof, the piston defining a combustion chamber with the engine body in the cylinder bore, the engine body defining a first intake passage through which primary air is introducible into the combustion chamber and an exhaust passage through which exhaust gases are dischargeable from the combustion chamber.

The invention aims to provide an improved four stroke engine incorporating a secondary air introducing system having a less complicated structure to introduce secondary air to an exhaust passage of the engine.

Therefore, the invention provides that the engine body further defines a second intake passage through which secondary air can flow to the exhaust passage, wherein the second intake passage has an end at a surface of the engine body.

## Description

The invention relates to a four stroke engine comprising an engine body defining a cylinder bore therein, a piston reciprocally moveable within the cylinder bore along a longitudinal axis thereof, the piston defining a combustion chamber with the engine body in the cylinder bore, the engine body defining a first intake passage through which primary air is introducible into the combustion chamber and an exhaust passage through which exhaust gases are dischargeable from the combustion chamber. Further, the invention relates to a motorized apparatus, in particular a motorcycle, comprising a frame to which an internal combustion engine for providing a rotational force is mounted.

Typically, four stroke engines have an engine body that defines a cylinder bore. A piston is reciprocally disposed within the cylinder bore. The piston defines a combustion chamber with the engine body in the cylinder bore. The engine body defines an intake passage through which the ambient air is introduced into the combustion chamber and an exhaust passage through which exhaust gases are discharged from the combustion chamber.

The exhaust gases preferably contain no unbumt gases. In reality, however, the exhaust gases can contain some unbumt gases. The unbumt gases include hydrocarbon (HC) and carbon monoxide (CO). Conventionally, a secondary air introducing system is provided to introduce secondary air into the exhaust passage. The secondary air can be mixed with the exhaust gases in the exhaust passage. The exhaust gases can be burnt in a recombustion device such as, for example, a catalytic device located downstream of the exhaust passage. Thus, the unburnt gases are removed prior to being discharged to the atmosphere. Because an end of the secondary air introducing system is placed at a location in the exhaust passage, the secondary air can be efficiently introduced into the exhaust passage by the exhaust pulsation caused in the exhaust passage while the engine operates. For example, Japanese Patent Publication P2002-4849A discloses a four stroke engine having such a secondary air introducing system.

The four stroke engines typically have intake and exhaust valves that connect or disconnect the intake and exhaust passages with the combustion chamber, respectively. The engine disclosed in Japanese Patent Publication P2002-4849A includes a camshaft and rocker arms to actuate the intake and exhaust valves. The camshaft and the rocker arms are disposed around the intake and exhaust valves. The secondary air introducing system thus has a relatively complicated structure to reach the exhaust passage because the secondary air introducing system should make a detour to avoid the camshaft and the rocker arms.

It is, therefore, an object of the invention to provide an improved four stroke engine incorporating a secondary air introducing system having a less complicated structure to introduce secondary air to an exhaust passage of the engine.

It is further an object to improve a motorized apparatus of the above kind to be more generally applicable.

For an engine of the above kind, this object is solved in an inventive manner in that the engine body further defines a second intake passage through which secondary air can flow to the exhaust passage, wherein the second intake passage has an end at a surface of the engine body.

Preferably, the longitudinal axis intersects the surface at which the second intake passage has its end.

Further, preferably the engine body comprises a crankcase, at least one cylinder block, and at least one cylinder head assembly, wherein preferably the surface at which the second intake passage has its end is a top surface of the cylinder head assembly.

Furthermore, preferably an intake valve is arranged to connect or disconnect the first intake passage with the combustion chamber, an exhaust valve is arranged to connect or disconnect the exhaust passage with the combustion chamber, and a crankshaft is provided being rotatable with a movement of the piston, and driving a valve actuating mechanism arranged to actuate the intake and exhaust valves, the valve actuating mechanism in particular comprising a first portion of the valve actuating mechanism being positioned at least adjacent to the exhaust valve and a second portion of the valve actuating mechanism being positioned adjacent to the crankshaft.

Still further, preferably the valve actuating mechanism additionally comprises a third portion that couples the first portion and second portion with each other, the third portion extending generally along the longitudinal axis.

Moreover, preferably the third portion includes push rods.

Also, preferably the first portion of the valve actuating mechanism comprises at least one rocker arm associated with the exhaust valve, wherein the rocker arm and the second intake passage are positioned next to each other.

According to a preferred embodiment, the valve actuating mechanism comprises at least one push rod that couples the rocker arm with the second portion.

According to a further preferred embodiment, the first portion of the valve actuating mechanism comprises a pair of rocker arms associated with the intake and exhaust valves, the rocker arms generally interposing the second intake passage therebetween.

According to a still further preferred embodiment, the engine comprises a spark plug configured to make a spark in the combustion chamber, the spark plug and the second intake passage being positioned next to each other.

Also, according to a preferred embodiment, the engine comprises a pair of spark plugs each of which is configured to make a spark in the combustion chamber, the spark plugs generally interposing the second intake passage therebetween.

According to a further preferred embodiment, the longitudinal axis generally extends vertically with respect to a surface of the engine body, which surface is generally located at a top of the engine body.

According to a still further preferred embodiment, the engine body has a plurality of cooling fins extending outwardly from another surface of the engine body.

According to a furthermore preferred embodiment, the second portion of the valve actuating mechanism includes a camshaft extending next to the crankshaft.

Besides, for a motorized apparatus of the above kind, the above object is solved in an inventive manner in that the internal combustion engine is configured according to at least one of the claims 1 to 14.

By improving the motorized apparatus in such a manner, it becomes more economically producable and thereby more generally applicable.

Further preferred embodiments of the invention are subject to the respective subclaims.

In the following, the invention will be described in greater detail by means of a preferred embodiment thereof with reference to the attached drawings, wherein:
- FIG. 1: illustrates a side elevational view of a motorcycle mounting an engine configured in accordance with certain features, aspects and advantages of the present invention, wherein a fuel tank is shown in phantom;
- FIG. 2: illustrates a top plan view of the motorcycle of FIG. 1, wherein the fuel tank also is shown in phantom;
- FIG. 3: partially illustrates a cross-sectional side view of a rear bank of the engine;
- FIG. 4: illustrates the rear bank looked in the direction indicated by the arrows 4, 4 of FIG. 3, wherein bolts for coupling a cylinder head assembly of the rear bank are removed;
- FIG. 5: illustrates the rear bank without a head cover of the cylinder head assembly and looked in the direction indicated by the arrows 5, 5 of FIG. 3;
- FIG. 6: illustrates the rear bank without the head cover and a rocker arm mount of the cylinder head assembly and looked in the direction indicated by the arrows 6, 6 of FIG. 3;
- FIG. 7: illustrates a bottom side of a cylinder head body of the cylinder head assembly;
- FIG. 8: partially illustrates the rear bank looked in the direction indicated by the arrows 8, 8 of FIG. 5, wherein the rear bank except for rocker arms, push rods, tappets and a cam of a camshaft is schematically shown in phantom;
- FIG. 9: partially illustrates the rear bank looked in the direction indicated by the arrows 9, 9 of FIG. 6;
- FIG. 10: partially illustrates the rear bank looked in the direction indicated by the arrows 10, 10 of FIG. 6, wherein the head cover and the rocker arm mount of the cylinder head assembly are shown in phantom; and
- FIG. 11: partially illustrates the rear bank looked in the opposite side of FIG. 3.

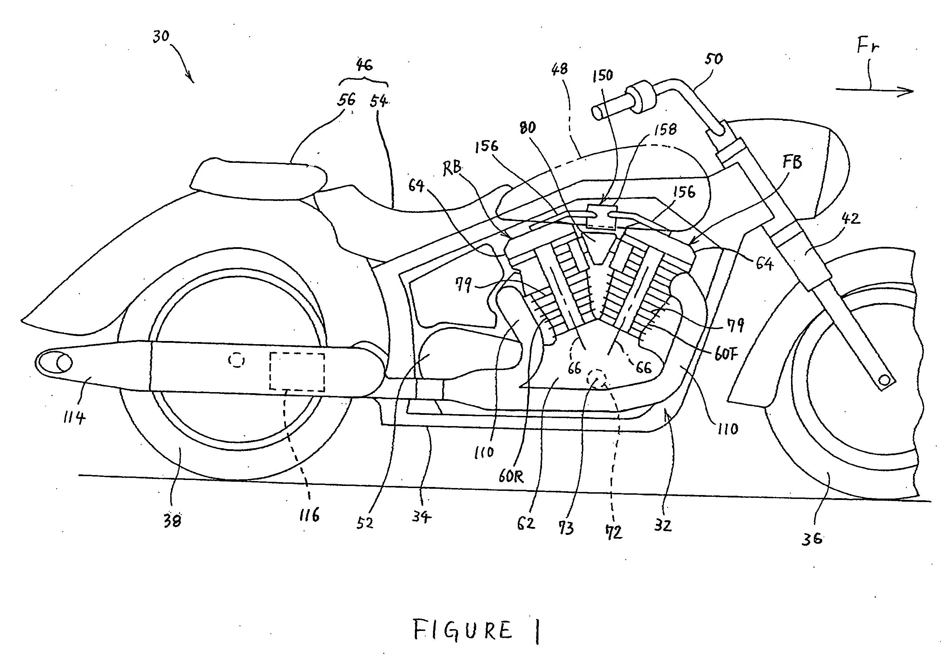

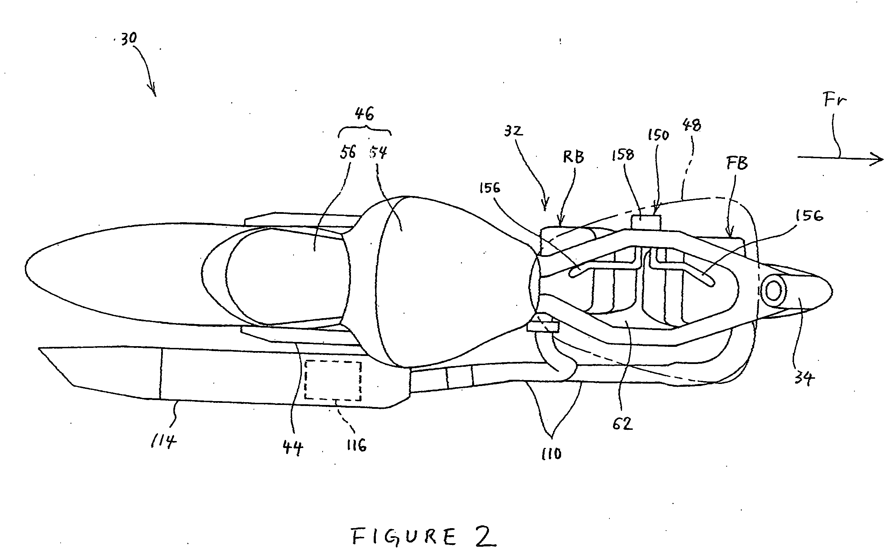

With reference to FIGS. 1 and 2, an overall construction of a motorcycle 30 that mounts an internal combustion engine 32 configured in accordance with certain features, aspects and advantages of the present invention is described. The motorcycle 30 merely exemplifies one type of machinery that is powered by the engine 32. The engine 32 described below can be applied for other types of machinery such as, for example, other land vehicles including automobiles, motor scooters and mopeds; marine vehicles and stationary machines. Such applications will be apparent to those of ordinary skill in the art in light of the description herein.

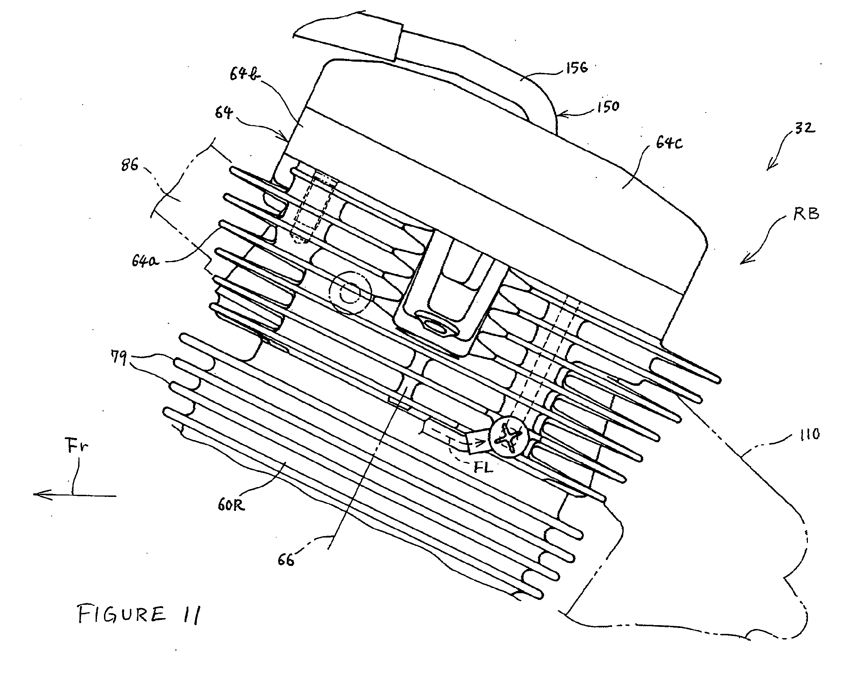

As used through this description, the terms "forward" and "front" mean at or to the side where a leading end of the motorcycle 30 is situated when the motorcycle 30 proceeds, and the terms "rear" and "rearward" mean at or to the opposite side of the front side, unless indicated otherwise or otherwise readily apparent from the context use. The arrow Fr of FIGS. 1-8 and 11 indicates the front side of the motorcycle 30.

Also, as used in this description, the term "horizontally" means that the subject portions, members or components extend generally parallel to the ground when the motorcycle 30 stands normally on the ground. The term "vertically" means that portions, members or components extend generally normal to those that extend horizontally.

Further, as used through the description, the term "right hand side" means the side where the right hand of the rider of the motorcycle 30 is positioned, and the term "left hand side" means the side where the left hand of the rider is positioned.

The motorcycle 30 preferably comprises a frame 34, a front wheel 36, a rear wheel 38, a front fork 42, a rear arm 44, a seat unit 46 and a fuel tank 48 other than the engine 32.

The frame 34 preferably forms a basic framework of the motorcycle 30. A front portion of the frame 34 preferably supports the front fork 42 for pivotal movement about a generally vertically extending axis. With the pivotal movement of the front fork 42, the motorcycle 30 can be directed rightward or leftward. The front fork 42 preferably carries the front wheel 36. The front fork 42 also carries a handle bar 50 atop thereof. The rider of the motorcycle 30 can steer the front fork 42 with the handle bar 50.

A rear portion of the frame 34 preferably supports the rear arm 44. The rear arm 44 preferably carries the rear wheel 38. The rear wheel 38 is a propulsive wheel in the illustrated embodiment. A mid portion of the frame 34 preferably mounts the engine 32. An output or motive power of the engine 32 is transmitted to the rear wheel 38 through a transmission 52.

The frame 34 also supports the seat unit 46. The illustrated seat unit 46 is a tandem type one and comprises a main seat 54 for the rider who drives the motorcycle 30 and a sub seat 56 for another rider, if any. The riders straddle the respective seat 54, 56.

The fuel tank 48 in the illustrated embodiment is generally positioned above the engine 32. The fuel tank 48 preferably contains fuel that is supplied to the engine 32 for combustion.

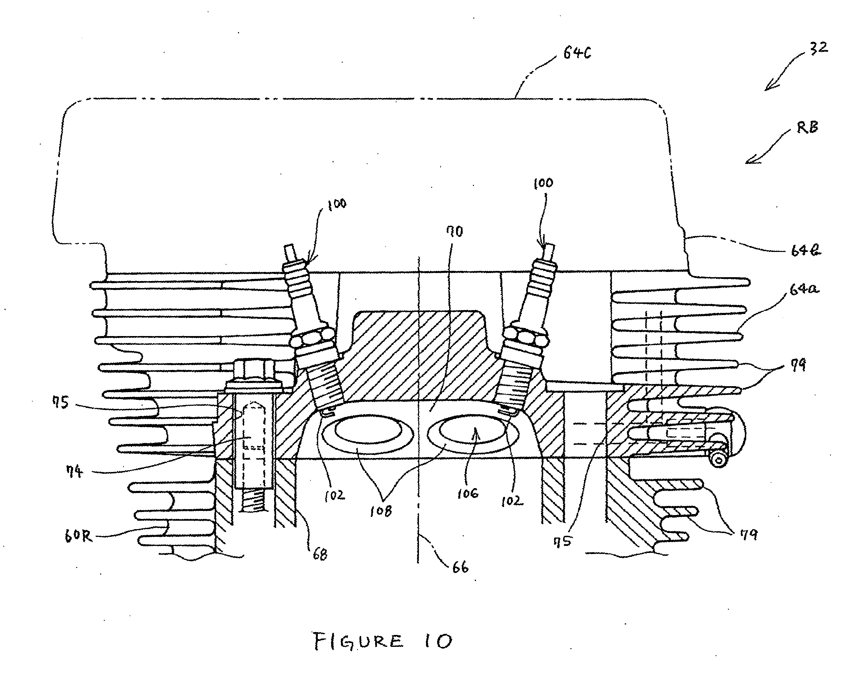

With reference to FIGS. 1-11, an overall construction of the engine 32 is described.

With reference to FIGS. 1 and 2, the engine 32 preferably is an OHV-type, four stroke engine. The engine 32 has an engine body that is preferably made of aluminum alloy and can be produced in casting processes. The engine body preferably comprises a front cylinder block 60F, a rear cylinder block 60R, a crankcase 62 and a pair of cylinder head assemblies 64. The front cylinder block 60F and one of the cylinder head assemblies 64 together form a front bank FB, while the rear cylinder block 60R and the other cylinder head assemblies 64 together form a rear bank RB.

The front and rear banks FB, RB extend upward from the crankcase 62 to generally form a V configuration. That is, respective top ends of the banks FB, RB are spaced apart from each other more than respective bottom ends thereof. Because both of the banks FB, RB are almost similar to each other, the rear bank RB can represent the respective banks FB, RB in the description below unless otherwise described.

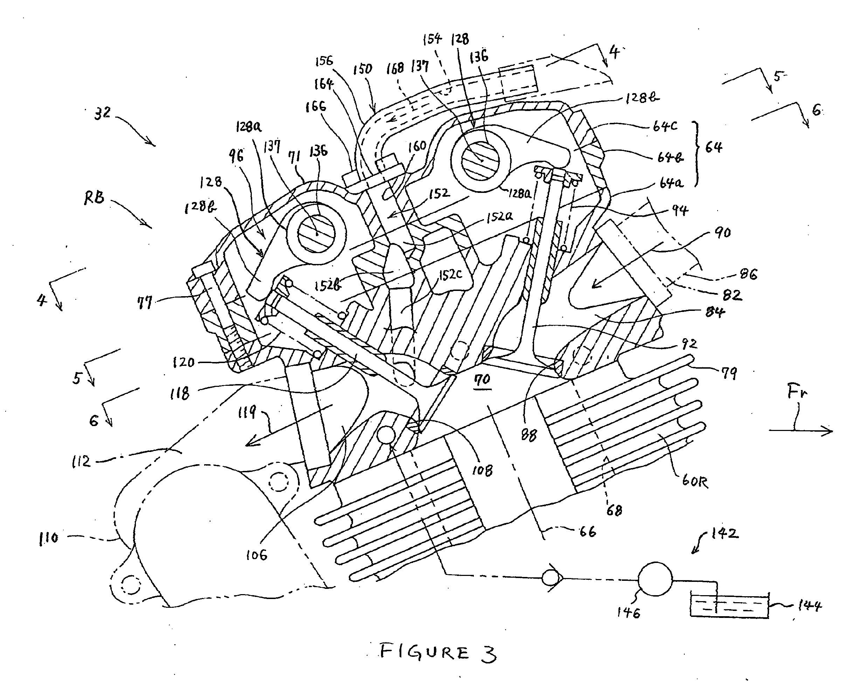

With reference to FIG. 3, the cylinder block 60R of the rear bank RB preferably defines a cylinder bore 68. The cylinder bore 68 preferably has a longitudinal axis 66 that extends generally vertically. The illustrated longitudinal axis 66 also is an axis of the rear cylinder block 60R. Thus, the reference numeral 66 can indicate the cylinder axis in the description below unless otherwise described.

A piston (not shown) is reciprocally disposed in the cylinder bore 68. The piston is movable along the cylinder axis 66. The cylinder head assembly 64 closes a top end of the cylinder bore 68. The piston defines a combustion chamber 70 together with the cylinder block 60R and the cylinder head assembly 64 in the cylinder bore 68.

With reference to FIG. 1, the crankcase 62 closes a bottom end of each cylinder bore 68 and journals a crankshaft 72 therein. A longitudinal axis 73 of the crankshaft 72 transversely extends through the crankcase 62. Each piston of the respective banks FB, RB is connected to the crankshaft 72 through a respective connecting rod. Thus, the crankshaft 72 rotates in the crankcase 62 with the reciprocal movement of the pistons.

With reference to FIGS. 3-11, each cylinder head assembly 64 preferably comprises a cylinder head body 64a, a rocker arm mount 64b and a head cover 64c. The cylinder head body 64a of the rear bank RB abuts on a top surface of the cylinder block 60R and the rocker arm mount 64b and the head cover 64c are put on top of one another in this order. Preferably, the head cover 64c entirely covers the rocker arm mount 64b. The head cover 64c thus has a top surface 71. The cylinder axis 66 intersects the top surface 71.

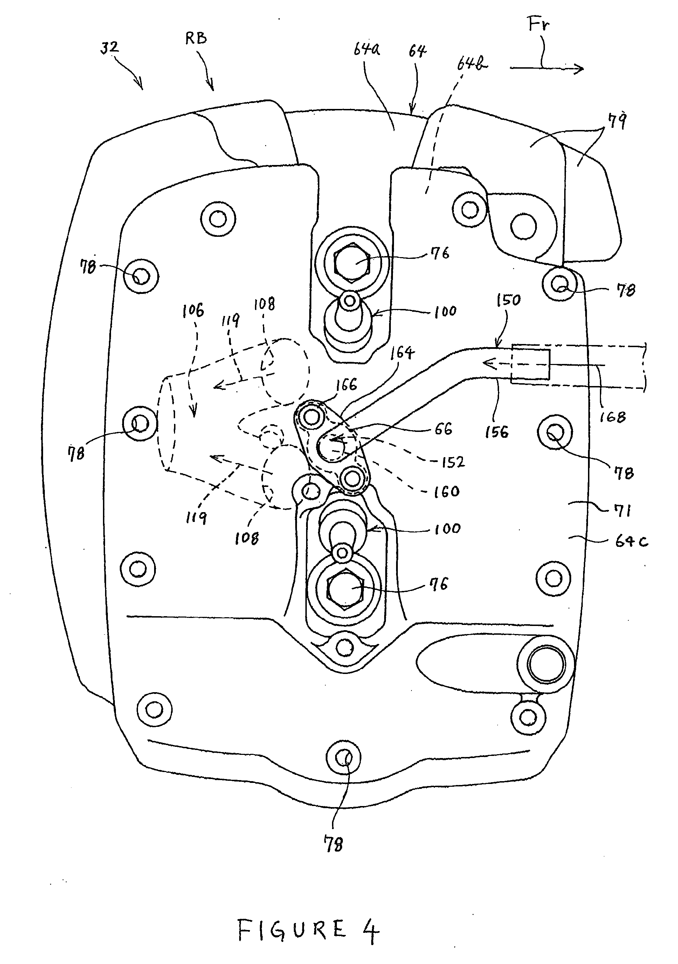

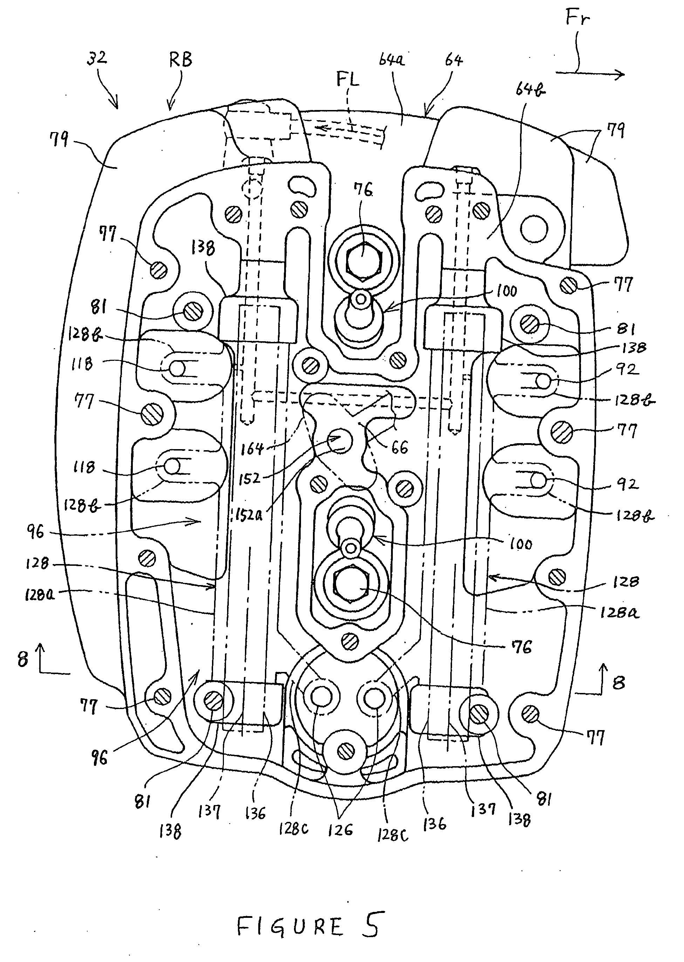

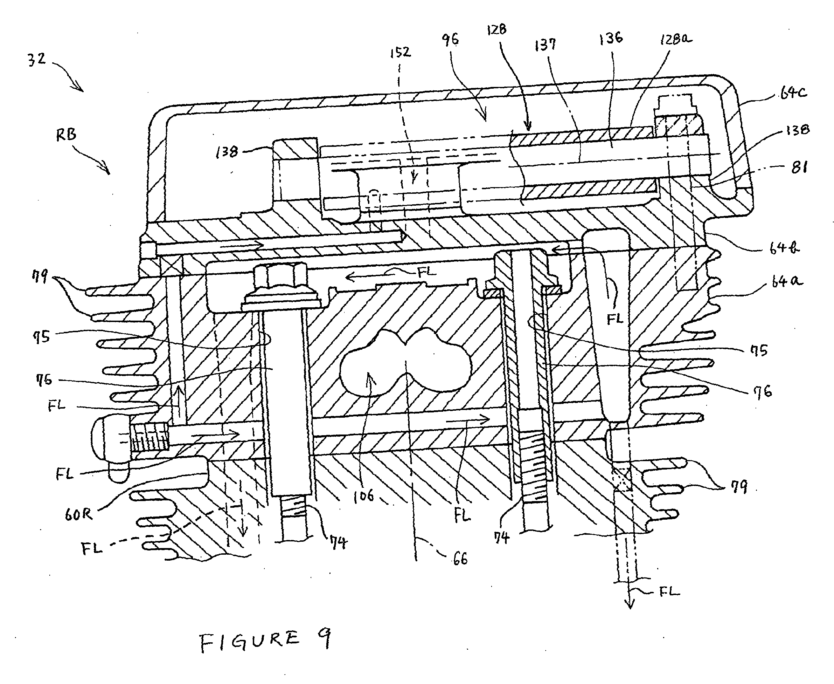

As best shown in FIGS. 4 and 9, a plurality of stud bolts 74 extend upward and parallel to the cylinder axis 66 from the cylinder block 60R. The cylinder block 60R and the cylinder head body 64a define holes 75 having an inner diameter that is slightly larger than an outer diameter of the bolts 74. Elongated nuts 76 are inserted into the holes 75 and are screwed onto the bolts 74. The cylinder head body 64a thus is affixed to the cylinder block 60R. On the other hand, as best shown in FIG. 3, the rocker arm mount 64b and the head cover 64c are together affixed to the cylinder head body 64a by bolts 77 that extend through bolt holes 78. In addition, as shown in FIGS. 5 and 9, the rocker arm mount 64b is further affixed to the cylinder head body 64a by bolts 81.

With reference to FIGS. 1 and 3-11, each cylinder block 60F, 60R and each cylinder head body 64a in the illustrated embodiment have a plurality of cooling fins 79 extending generally horizontally from a side surface thereof. That is, the illustrated fins 72 extend generally normal to the cylinder axis 66. The heat of the engine body can be effectively radiated to the ambient air from the fins 72 particularly while the motorcycle 30 travels.

With reference to FIGS. 1 and 3, the engine 32 preferably has an intake system through which the ambient air is introduced into the combustion chambers 70. The intake system preferably comprises a carburetor 80, an outer intake passage 82 and an inner intake passage 84.

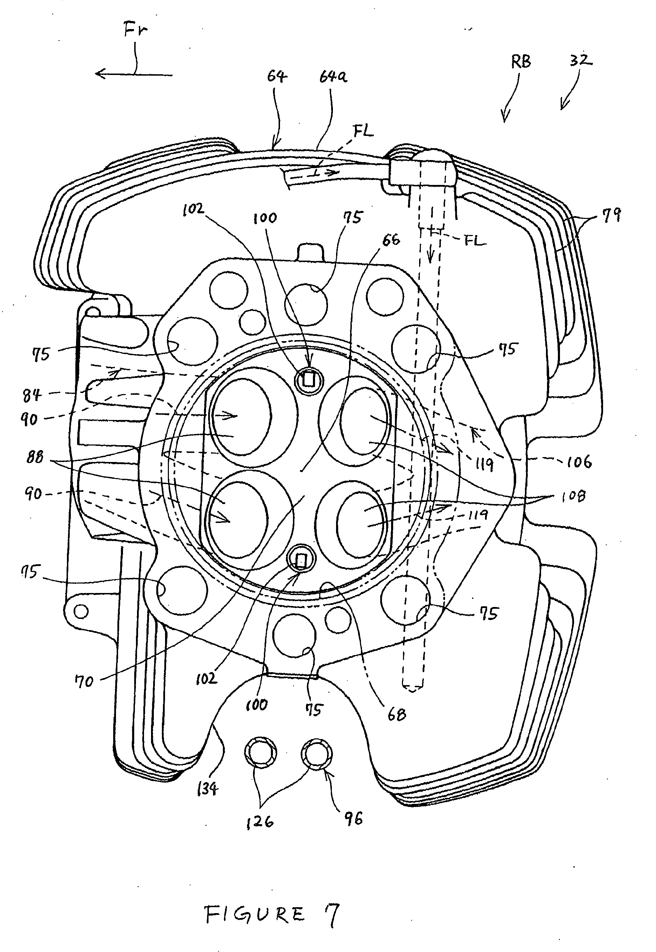

The carburetor 80 preferably is disposed in a space between the respective banks FB, RB below the fuel tank 48. The carburetor 80 preferably has an air inlet. The ambient air enters the carburetor 80 through the air inlet when the engine 32 is in the intake stroke. That is, the air is pulled because a negative pressure is generated in each combustion chamber 70 when the piston moves toward the crankcase 62. The carburetor 80 also has an air adjusting mechanism such as, for example, a throttle valve mechanism therein. A throttle valve actuator preferably is placed on the handle bar 50. When the rider operates the throttle valve actuator, the throttle valve moves between an open position and a closed position to adjust an amount of the air in response to a degree of the operation of the throttle valve actuator. The air is introduced into each combustion chamber 70 through the outer intake passage 82 and the inner intake passage 84. The outer intake passage 82 preferably is defined in an intake conduit 86 that connects the carburetor 80 and the cylinder head body 64a with each other. The inner intake passage 84 preferably is defined in the cylinder head body 64a to extend toward the combustion chamber 70. As best shown in FIG. 7, the inner intake passage 84 in the illustrated embodiment is bifurcated to define a pair of intake ports 88 at the combustion chamber 70.

The engine 32 also has a fuel supply system through which fuel is supplied to the combustion chambers 70 from the fuel tank 48. Preferably, the carburetor 80 also works as a part of the fuel supply system. The fuel is metered within the carburetor 80 in accordance with the amount of the air adjusted by the throttle valve mechanism. The fuel is mixed with the air to form an air/fuel charge in the carburetor 80. As indicated by the arrows 90 of FIGS. 3 and 7, the air and the fuels are introduced into each combustion chamber 70 as the air/fuel charge through the intake ports 88 in the intake stroke of the engine 32.

Other charge formers such as, for example, a fuel injection device can replace the carburetor. The carburetor and the fuel injection device can be disposed at any places in the intake system. In this alternative, for example, an intake conduit or a plenum chamber member can be placed in the space where the carburetor of this embodiment is disposed.

With reference to FIG. 3, intake valves 92 are reciprocally disposed on the cylinder head body 64a. Each intake valve 92 is associated with the respective intake port 88 and is movable between an open position and a closed position. When the intake valves 92 are in the open position, the inner intake passage 84 communicates with the combustion chamber 70. In other words, the inner intake passage 84 and the combustion chamber 70 are connected with each other when the intake ports 88 are open. When the intake valves 92 are in the closed position, the inner intake passage 84 does not communicate with the combustion chamber 70. In other words, the inner passage 84 and the combustion chamber 70 are disconnected from each other when the intake ports 88 are closed.

An intake bias spring 94 is provided at each intake valve 92 to urge the intake valve 92 toward its closed position. The intake valves 92 can be moved toward its open position by a valve actuating mechanism 96, which will be described in greater details below.

With reference to FIGS. 4-7 and 10, the engine 32 preferably has an ignition system to ignite the air/fuel charges in each combustion chamber 70. In the illustrated embodiment, two spark plugs 100 of the ignition system extend through the cylinder head body 64a. Each spark plug 100 has discharge electrodes 102 which are exposed to the respective combustion chamber 70. Preferably, the spark plugs 100 are transversely spaced apart from one another. Although the spark plugs 100 extend generally along the cylinder axis 66, the electrodes 102 of the respective spark plugs 100 are positioned slightly closer to each other than an opposite portion of the respective spark plugs 100. That is, the spark plugs 100 are positioned and inclined generally symmetrically relative the cylinder axis 66. The electrodes 102 make a spark therebetween at a suitable moment. The air/fuel charge thus bums in the combustion chamber 70. The pistons move to rotate the crankshaft 72, accordingly.

With reference to FIGS. 1-4, 7 and 10, the engine 32 preferably has an exhaust system to discharge the burnt charge, i.e., exhaust gases, from the combustion chambers 70. Each cylinder head body 64a preferably defines an inner exhaust passage 106. The inner exhaust passage 106 is bifurcated to define two exhaust ports 108 at the combustion chamber 70. An exhaust conduit 110 extends from each cylinder head body 64a. Each exhaust conduit 110 defines an outer exhaust passage 112 that communicates with the inner exhaust passage 106. As best shown in FIG. 1, the respective exhaust conduits 110 merge together.

An exhaust muffler 114 is connected to a downstream end of the exhaust conduit 110. The exhaust gases thus are discharged outside through the exhaust ports 108, the inner exhaust passage 106, the outer exhaust passages 112 of the exhaust conduits 110 and the exhaust muffler 114. The exhaust muffler 114 preferably contains a catalytic device 116 therein.

Exhaust valves 118 are reciprocally disposed on the cylinder head body 64a. Each exhaust valve 118 is associated with the respective exhaust port 108 and is movable between an open position and a closed position. When the exhaust valves 118 are in the open position, the inner exhaust passage 106 communicates with the combustion chamber 70. In other words, the exhaust passage 106 and the combustion chamber 70 are connected with each other when the exhaust ports 108 are open. When the exhaust valves 118 are in the closed position, the inner exhaust passage 106 does not communicate with the combustion chamber 70. In other words, the inner exhaust passage 106 and the combustion chamber 70 are disconnected from each other when the exhaust ports 108 are closed.

An exhaust bias spring 120 is provided at each exhaust valve 118 to urge the exhaust valve 118 toward its closed position. The exhaust valves 118 can be moved toward its open position by the valve actuating mechanism 96. As indicated by the arrows 119 of FIGS. 3, 4 and 7, the exhaust gases go out to the inner exhaust passages 106.

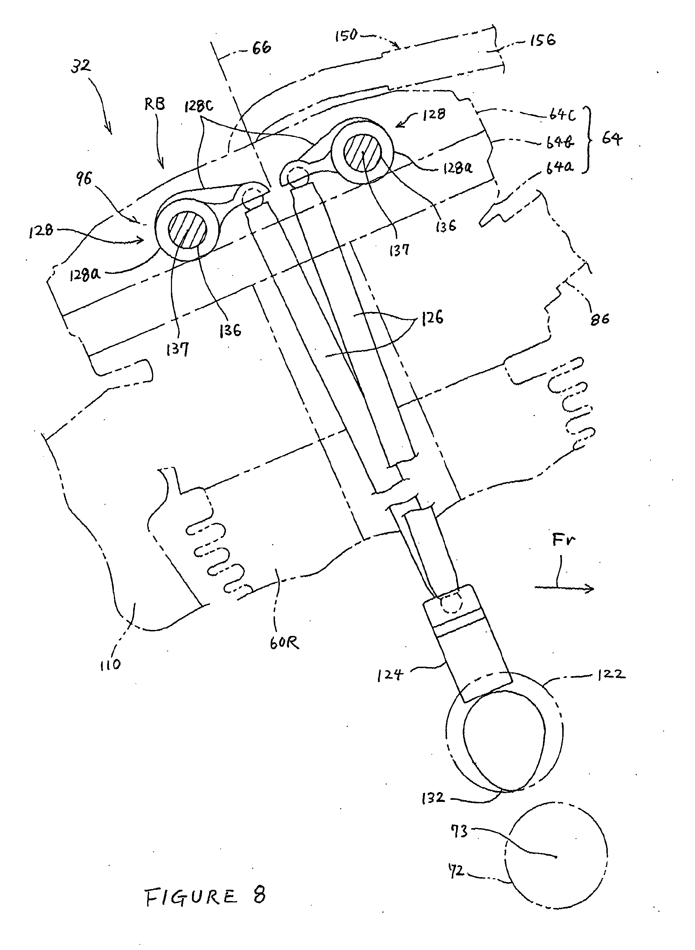

With reference to FIGS. 3, 5, 8 and 9, each valve actuating mechanism 96 preferably comprises a camshaft 122 (FIG. 8), a pair of lifters (or oil tappets) 124, a pair of push rods 126 and a pair of rocker arm units 128. In the illustrated embodiment, the camshaft 122 is disposed within the crankcase 62, the rocker arm units 128 are disposed within the cylinder head assembly 64, and the lifters 124 and the push rods 126 are disposed on the right hand side of the engine body. The rocker arm units 128 form a first portion of the valve actuating mechanism 96. The camshaft 122 forms a second portion of the valve actuating mechanism 96. The lifters 124 and the push rods 126 form a third portion of the valve actuating mechanism 96.

The crankcase 62 journals the camshaft 122. The camshaft 122 extends adjacent to the crankshaft 72 and parallel to the crankshaft 72. The crankshaft 72 drives the camshaft 122 through a drive mechanism (not shown). As schematically shown in FIG. 8, the camshaft 122 preferably has a pair of cam surfaces 132 which are arranged off from each other in a circumferential direction of the camshaft 122. The cam surfaces 132 can abut on a bottom surface of the associated lifters 124 and can move the lifters 124 upward at different moments.

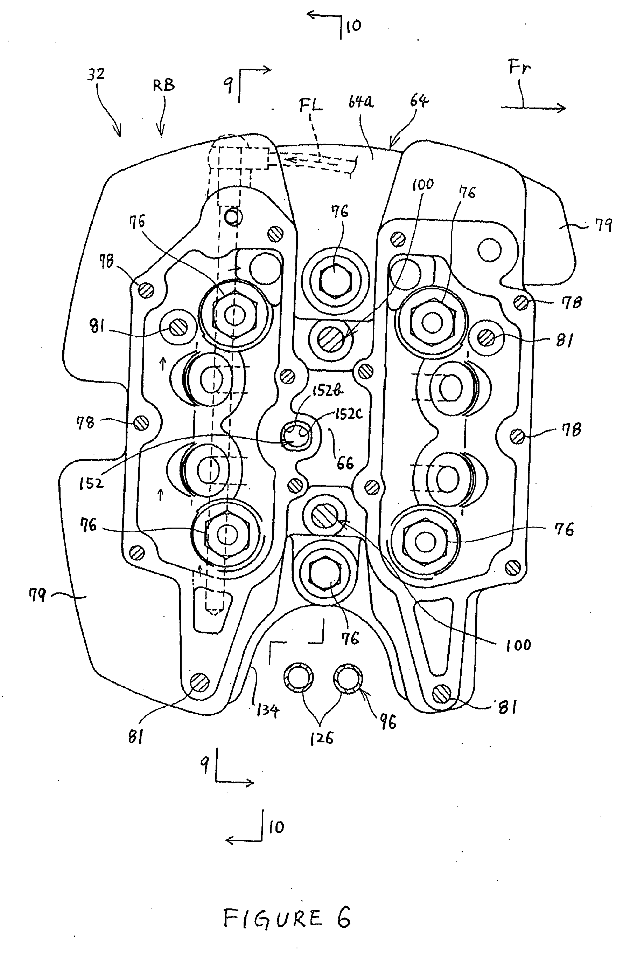

As best shown in FIGS. 6 and 7, the illustrated engine 32 defines a recessed area 134 on the right hand side of the engine body. The push rods 126 preferably extend generally vertically through the recessed area 134. A bottom surface of each push rod 126 abuts on a top surface of the respective lifter 124. The lifters 124 thus can lift the associated push rods 126 when the cam surfaces 132 meet the associated lifters 124.

With reference to FIGS. 3, 5, 8 and 9, each rocker arm unit 128 preferably comprises a tubular section 128a, a pair of drive arms 128b and a driven arm 128c.

The tubular section 128a preferably extends transversely above the rocker arm mount 64b. That is, longitudinal axes 137 of the respective tubular sections 128a extend parallel to each other in the transverse direction of the engine 32 and generally normal to the cylinder axis 66. The tubular sections 128a are spaced apart from each other and interpose the spark plugs 100 therebetween. Preferably, the tubular sections 128a are positioned generally symmetrically relative to a vertical plane that extends generally vertically and includes the cylinder axis 66 and respective axes of the spark plugs 100. A rocker arm shaft 136 preferably extends through each tubular section 128a. In the illustrated embodiment, each tubular section 128a is pivotable about the longitudinal axis 137 thereof relative to the rocker arm shaft 136.

As best shown in FIG. 9, the rocker arm mount 64b preferably has a pair of support portions 138 to support the respective rocker arm shafts 136. Preferably, one of the support portions 138 is separable for easy setting of the rocker arm shaft 136. In the illustrated embodiment, a top end of the support portion 138 on the right hand side of the engine 32 is separable. The top end piece preferably affixed to the rest part of the support portion 138 by the bolts 81 that couples the rocker arm mount 64b to the cylinder head body 64a.

As best shown in FIGS. 5 and 8, the driven arm 128c of each rocker arm unit 128 extends to a top end of the respective push rod 126. In other words, each top end of the push rod 126 abuts on a bottom surface of the associated driven arm 128c. On the other hand, as best shown in FIGS. 3 and 5, the drive arms 128b of each rocker arm unit 128 extend to respective top ends of the intake valves 92 or respective top ends of the exhaust valves 118. In other words, each bottom end of the drive arm 128b abuts on a top end of the associated intake or exhaust valve 92, 118.

In operation of the valve actuating mechanism 96, the camshaft 122 rotates when the crankshaft 72 drives the camshaft 122. Each cam surface 132 moves the associated lifter 124 upward. The lifter 124 thus lifts the associated push rod 126. Each push rod 126 pushes the associated driven arm 128c of the rocker arm unit 128 when the lifter 124 lifts the push rod 126. Thus, the tubular section 128a pivots about the longitudinal axis 137 thereof. With the pivotal movement of the tubular section 128a, the drive arms 128b in turn push the intake or exhaust valves 92, 118. The intake or exhaust valves 92, 118 move to their open positions against the urging force of the bias springs 94, 120. The intake ports 88 open and the air/fuel charge enters the combustion chamber 70, or the exhaust ports 108 open and the burnt charge is discharged from the combustion chamber 70. After awhile, the cam surface 132 leaves the lifter 124. The lifter 124 moves downward and no longer lifts the push rod 126. The rocker arm unit 128 thus moves back to its initial position. The intake or exhaust valves 92, 118 return to their closed positions.

The motorcycle 30 or the engine 32 can have other systems, devices, components and members. For example, the engine 32 preferably has a lubrication system 142 (FIG. 3) that includes a lubricant tank 144 and a lubrication pump 146. The lubrication pump 146 pressurizes the lubricant to circulate within the engine body to lubricate portions of the engine body. Flows of the lubricant are indicated by the arrows FL of FIGS. 5-7, 9 and 11.

The illustrated engine 32 further comprises a secondary air introducing system 150. The secondary air introducing system 150 preferably introduces the ambient air into the inner exhaust passage 106. Unbumt gases such as, for example, hydrocarbon (HC) and carbon monoxide (CO) are mixed with the air in the inner and outer exhaust passages 106, 112 and can be burned within the catalytic device 116.

With reference to FIGS. 1-6, 8, 9 and 11, the secondary air introducing system 150 preferably comprises inner passages (or second intake passages) 152 defined by the respective cylinder head assemblies 64, outer passages 154 defined by air introducing conduits or tubes 156 and a airflow regulator 158. In the illustrated embodiment, the front bank FB and the rear bank RB each has a set of one inner passage 152 and one outer passage 154. The respective outer passages 154 preferably are connected with each other above and between the front and rear banks FB, FR. Because the respective sets of passages 152, 154 are almost similar to each other, one set thereof on the rear bank RB can represent both of the sets in the description below unless otherwise described.

The inner passage 152 of the rear bank RB extends generally vertically along the cylinder axis 66. A bottom end of the inner passage 152 opens to the inner exhaust passage 106, while a top end 160 of the inner passage 152 opens in an area of the top surface 71 of the head cover 64c. Preferably, the bottom end of the inner passage 152 is positioned in the close vicinity of the intake ports 108, and the inner passage 152 opens generally at a center of the top surface 71.

The illustrated inner passage 152 comprises an upper portion 152a, a mid portion 152b and a lower portion 152c. The upper portion 152a has the top end 160. The lower portion 152c opens to the inner exhaust passage 106. The mid portion 152b connects the upper and lower portions 152a, 152c with each other.

The rocker arm mount 64b and the cylinder head body 64a define the mid portion 152b. The illustrated mid portion 152b is formed in casting processes of the rocker arm mount 64b and the cylinder head body 64a. That is, one recess is formed in a bottom surface of the rocker arm mount 64b, while another recess is formed in a top surface of the cylinder head body 64a. Both of the recesses are coupled with each other to define the mid portion 152b.

The head cover 64c and the rocker arm mount 64b preferably define the upper portion 152a. Also, the cylinder head body 64a preferably defines the lower portion 152c. The illustrated upper and lower portions 152a, 152c are circular apertures formed in a drilling process. In the illustrated embodiment, the upper portion 152a generally extends along the cylinder axis 66 and the lower portion 152c slightly inclines relative to the cylinder axis 66 as is shown in FIG. 3.

The upper portion 152a preferably is positioned next to the rocker arm units 128. The rocker arm units 128 in the illustrated embodiment interpose the upper portion 152 therebetween. Also, the upper portion 152a preferably is positioned next to the spark plugs 100, and the spark plugs 100 interpose the upper portion 152a therebetween.

The air introducing conduit 156 preferably has a flange 164 at an end thereof. The outer passage 154 penetrates the flange 164. The flange 164 preferably is affixed to the top surface 71 of the head cover 64c by bolts 166 such that the outer passage 154 communicates with the inner passage 152. The air introducing conduit 156 preferably curves and extends toward the airflow regulator 158 along the top surface 71 except for its portion that has the flange 164.

The airflow regulator 158 preferably is positioned between the front and rear banks FB, RB below the fuel tank 48 and on a left hand side of the motorcycle 30. The airflow regulator 158 preferably has a housing that is affixed to the frame 34 or a bracket extending from the engine body. The other end of the air introducing conduit 156 preferably is inserted into the housing of the airflow regulator 158. That is, two air introducing conduits 156 extend from the front and rear banks FB, RB and meet together within the housing of the airflow regulator 158.

The housing of the airflow regulator 158 preferably has an air inlet. The air inlet is defined at a suitable location of the housing to introduce the ambient air into an internal space of the housing. The airflow regulator 158 incorporates an airflow amount regulating unit in the housing. The airflow amount regulating unit preferably comprises a one-way valve or check valve and an air amount regulating valve. The one-way valve allows the air to flow toward the inner exhaust passage 106 and prevents the air from flowing in the reverse direction. The air amount regulating valve regulates an amount of the air that is introduced into the secondary air introducing system 150. Preferably, the regulating valve is adjustable outside of the housing.

The ambient air is introduced into the inner exhaust passage 106 through the airflow regulator 158, the outer passage 154 of the air flow introducing conduit 156 and the inner exhaust passage 106 of the cylinder head assembly 64 as indicated by the arrow 168 of FIGS. 3 and 4. The ambient air is pulled by negative pressure of the exhaust pulsation in the inner exhaust passage 106. The exhaust pulsation is generally caused by an interaction between the flow of exhaust gases in the inner exhaust passage 106 and the movement of the exhaust valves 118. Because the inner passage 152 opens in the close vicinity of the exhaust ports 108, the exhaust pulsation efficiently pulls the air.

In the illustrated embodiment, the cylinder head assembly 64 only has the rocker arm units 128 as a part of the valve actuating mechanism 96 and the rest parts of the valve actuating mechanism 96 (i.e., the push rods 126, the lifters 124 and the camshaft 122) are placed out of the cylinder head assembly 64. Thus, relatively large room can be provided for the inner passage 152 of the secondary air introducing system 150. The inner passage 152 can generally straightly extend within the cylinder head assembly 64. In other words, the inner passage 152 does not have a complicated structure.

A relatively large part of the air passage of the secondary air introducing system 150 is defined in the cylinder head assembly 64 and the foregoing part of the air passage can be simply made by the casting processes or the drilling process in this embodiment. The secondary air introducing system 150 thus can be quite easily completed.

Also, the illustrated inner passage 152 extends next to and between the rocker arm units 128 or the spark plugs 100. This arrangement further contributes to making the inner passage 152 simpler.

In addition, because the end of the illustrated inner passage is positioned in the top surface of the head cover where no cooling fins are provided, a total area of the cooling fins cannot be reduced. Thus, the cooling effect of the engine body cannot be hampered by the secondary air introducing system.

The engine can be an OHC type instead of the OHV type. In this alternative, a first portion of the valve actuating mechanism includes a camshaft and a second portion of the valve actuating mechanism includes a timing belt or chain that is wounds around the camshaft and the crankshaft.

The spark plugs can be disposed in a fore to aft direction of the motorcycle 30 than in the transverse direction. The engine can have a single spark plug than two spark plugs. In some arrangements, the top end of the inner passage can be positioned at a location out of the rocker arm units that does not exist in an area surrounded by the rocker arm units.

Although this invention has been disclosed in the context of certain preferred embodiment, it will be understood by those skilled in the art that the present invention extends beyond the specifically disclosed embodiment to other alternative embodiments and/or uses of the invention and obvious modifications and equivalents thereof. It is also contemplated that various combinations or sub-combinations of the specific features and aspects of the embodiment may be made and still fall within the scope of the invention. It should be understood that various features and aspects of the disclosed embodiment can be combined with or substituted for one another in order to form varying modes of the disclosed invention. Thus, it is intended that the scope of the present invention herein disclosed should not be limited by the particular disclosed embodiment described above, but should be determined only by a fair reading of the claims that follow.

Accordingly, a four stroke engine incorporating a secondary air introducing system that does not have a complicated structure to introduce secondary air to an exhaust passage of the engine can be presented.

Therein, the following features are individually or in any combination disclosed: A four stroke engine comprising an engine body that defines a cylinder bore. The cylinder bore has a longitudinal axis. A piston is reciprocally disposed within the cylinder bore. The piston is movable along the longitudinal axis. The piston defines a combustion chamber with the engine body in the cylinder bore. The engine body defines a first intake passage through which primary air is introduced into the combustion chamber and an exhaust passage through which exhaust gases are discharged from the combustion chamber. An intake valve is arranged to connect or disconnect the first intake passage with the combustion chamber. An exhaust valve is arranged to connect or disconnect the exhaust passage with the combustion chamber. A crankshaft is rotatable with a movement of the piston. A valve actuating mechanism is arranged to actuate the intake and exhaust valves. The crankshaft drives the valve actuating mechanism. A first portion of the valve actuating mechanism is positioned at least adjacent to the exhaust valve. A second portion of the valve actuating mechanism is positioned adjacent to the crankshaft. The engine body further defines a second intake passage through which secondary air flows to the exhaust passage. The second intake passage has an end at a surface of the engine body. The longitudinal axis intersects the surface.

According to a preferred embodiment, a four stroke engine comprises an engine body defining a cylinder bore. The cylinder bore has a longitudinal axis. A piston is reciprocally disposed within the cylinder bore. The piston is movable along the longitudinal axis. The piston defines a combustion chamber with the engine body in the cylinder bore. The engine body defines a first intake passage through which primary air is introduced into the combustion chamber and an exhaust passage through which exhaust gases are discharged from the combustion chamber. An intake valve is arranged to connect or disconnect the first intake passage with the combustion chamber. An exhaust valve is arranged to connect or disconnect the exhaust passage with the combustion chamber. A crankshaft is rotatable with a movement of the piston. A valve actuating mechanism is arranged to actuate the intake and exhaust valves. The crankshaft drives the valve actuating mechanism. A first portion of the valve actuating mechanism is positioned at least adjacent to the exhaust valve. A second portion of the valve actuating mechanism is positioned adjacent to the crankshaft. The engine body further defines a second intake passage through which secondary air flows to the exhaust passage. The second intake passage has an end at a surface of the engine body. The longitudinal axis intersects the surface.

In other words, a four stroke engine is disclosed comprising a cylinder block defining a cylinder bore, a cylinder head closing one end of the cylinder bore, a piston reciprocally disposed within the cylinder bore, the piston defining a combustion chamber with the cylinder block and the cylinder head in the cylinder bore, the cylinder head defining an exhaust passage through which exhaust gases are discharged from the combustion chamber, an exhaust valve arranged to connect or disconnect the exhaust passage with the combustion chamber, a crankshaft rotatable with a movement of the piston, and a valve actuating mechanism arranged to actuate the exhaust valve, the crankshaft driving the valve actuating mechanism, a first portion of the valve actuating mechanism being positioned adjacent to the exhaust valve, a second portion of the valve actuating mechanism being positioned adjacent to the crankshaft, the cylinder head further defining an intake passage through which air flows to the exhaust passage, the intake passage having an end at a surface of the cylinder head. Therein, preferably the cylinder bore has a longitudinal axis, and the longitudinal axis intersects the surface.

As explained above, a four stroke engine is provided having an engine body that defines a cylinder bore. The cylinder bore has a longitudinal axis. A piston is reciprocally disposed within the cylinder bore. A crankshaft is rotatable with a movement of the piston. A valve actuating mechanism actuates intake and exhaust valves. The crankshaft drives the valve actuating mechanism. A first portion of the valve actuating mechanism is positioned at least adjacent to the exhaust valve. A second portion of the valve actuating mechanism is positioned adjacent to the crankshaft. The engine body defines an inner passage through which secondary air flows to the exhaust passage. The inner passage has an end at a surface of the engine body. The longitudinal axis intersects the surface.

## Claims

1. Four stroke engine comprising an engine body defining a cylinder bore (68) therein, a piston reciprocally moveable within the cylinder bore (68) along a longitudinal axis (66) thereof, the piston defining a combustion chamber (70) with the engine body in the cylinder bore (68), the engine body defining a first intake passage (84) through which primary air is introducible into the combustion chamber (70) and an exhaust passage (106) through which exhaust gases are dischargeable from the combustion chamber (70),
**characterized in that**
the engine body further defines a second intake passage (152) through which secondary air can flow to the exhaust passage (106), wherein the second intake passage (152) has an end (160) at a surface (71) of the engine body.

2. Engine according to claim 1, **characterized in that** the longitudinal axis (66) intersects the surface (71) at which the second intake passage (152) has its end (160).

3. Engine according to claim 1 or 2, **characterized in that** the engine body comprises a crankcase (62), at least one cylinder block (60F,60R), and at least one cylinder head assembly (64), wherein preferably the surface (71) at which the second intake passage (152) has its end (160) is a top surface of the cylinder head assembly (64).

4. Four stroke engine according to at least one of the claims 1 to 3, **characterized in that** an intake valve (92) is arranged to connect or disconnect the first intake passage (84) with the combustion chamber (70), an exhaust valve (118) is arranged to connect or disconnect the exhaust passage (106) with the combustion chamber (70), and a crankshaft (72) is provided being rotatable with a movement of the piston, and driving a valve actuating mechanism (96) arranged to actuate the intake and exhaust valves (92,118), the valve actuating mechanism (96) in particular comprising a first portion (128) of the valve actuating mechanism (96) being positioned at least adjacent to the exhaust valve (118) and a second portion (122) of the valve actuating mechanism (96) being positioned adjacent to the crankshaft (72).

5. Engine according to claim 4, **characterized in that** the valve actuating mechanism (96) additionally comprises a third portion (124,126) that couples the first portion (128) and second portion (122) with each other, the third portion (124,126) extending generally along the longitudinal axis (66).

6. Engine according to claim 5, **characterized in that** the third portion (124,126) includes push rods (126).

7. Engine according to at least one of the claims 1 to 6, **characterized in that** the first portion (128) of the valve actuating mechanism (96) comprises at least one rocker arm (128b) associated with the exhaust valve (118), wherein the rocker arm (128b) and the second intake passage (152) are positioned next to each other.

8. Engine according to at least one of the claims 1 to 7, **characterized in that** the valve actuating mechanism (96) comprises at least one push rod (126) that couples the rocker arm (128b) with the second portion (122).

9. Engine according to at least one of the claims 1 to 8, **characterized in that** the first portion (128) of the valve actuating mechanism (96) comprises a pair of rocker arms (128b) associated with the intake and exhaust valves (92,118), the rocker arms (128b) generally interposing the second intake passage (152) therebetween.

10. Engine according to at least one of the claims 1 to 9, **characterized by** comprising a spark plug (100) configured to make a spark in the combustion chamber, the spark plug (100) and the second intake passage (152) being positioned next to each other.

11. Engine according to at least one of the claims 1 to 10, **characterized by** comprising a pair of spark plugs (100) each of which is configured to make a spark in the combustion chamber, the spark plugs (100) generally interposing the second intake passage (152) therebetween.

12. Engine according to at least one of the claims 1 to 11, **characterized in that** the longitudinal axis (66) generally extends vertically with respect to a surface (71) of the engine body, which surface (71) is generally located at a top of the engine body.

13. Engine according to at least one of the claims 1 to 12, **characterized in that** the engine body has a plurality of cooling fins (79) extending outwardly from another surface of the engine body.

14. Engine according to at least one of the claims 1 to 13, **characterized in that** the second portion (122) of the valve actuating mechanism includes a camshaft (122) extending next to the crankshaft (72).

15. Motorized apparatus, in particular a motorcycle, comprising a frame (34) to which an internal combustion engine (32) for providing a rotational force is mounted, **characterized in that** the internal combustion engine is configured according to at least one of the claims 1 to 14.
